# FASCICULE DE BREVET EUROPEEN

(11) **EP 0 883 757 B1**
(45) Date de publication et mention de la délivrance du brevet: **17.07.2002**
(21) Numéro de dépôt: 97952978.1
(22) Date de dépôt: 22.12.1997
(51) Int. Cl.: F16F 15/123

(54) **AMORTISSEUR DE TORSION PERFECTIONNE ET DISPOSITIF AMORTISSEUR EQUIPE D'UN TEL AMORTISSEUR DE TORSION**
VERBESSERTER TORSIONSSCHWINGUNGSDÄMPFER UND MIT SO EINEM TORSIONSSCHWINGSDÄMPFER BEFASSTE DÄMPFUNGSVORRICHTUNG
IMPROVED TORQUE DAMPER AND DAMPING DEVICE EQUIPPED WITH SUCH A TORQUE DAMPER

(30) Priorité: 23.12.1996 FR 9615864
(43) Date de publication de la demande: 16.12.1998
(73) Titulaire: VALEO, 75017 Paris (FR)
(72) Inventeur: BACHER, Michel, F-95580 Andilly (FR); KOVAC, Josip, F-77330 Ozoir la Ferrière (FR); LUCSAK, Patrick, F-62131 Verquin (FR)
(74) Mandataire: CABINET BONNET-THIRION
(86) Numéro de dépôt international: FR9702385
(87) Numéro de publication internationale: WO9828554

(56) Documents cités:
- EP-A- 0 756 105
- DE-A- 4 327 574
- DE-A- 19 536 513
- FR-A- 2 609 771
- GB-A- 100 615
- GB-A- 2 167 525
- US-A- 4 240 532

## Description

### Etat de la technique

La présente invention concerne les amortisseurs de torsion et les dispositifs amortisseurs équipés de tels amortisseurs de torsion, tels que par exemple les dispositifs qui sont incorporés dans les frictions d'embrayage pour véhicules automobiles.

On connaît des frictions d'embrayage équipées d'un dispositif amortisseur de torsion comprenant deux amortisseurs de torsion : un amortisseur principal et un préamortisseur.

L'amortisseur principal comporte un élément d'entrée solidaire de deux rondelles de guidage disposées de part et d'autre d'un voile. Les rondelles de guidage sont reliées entre elles par des entretoises qui les solidarisent. L'élément d'entrée consiste, dans le cas d'une application à une friction d'embrayage, en un disque de support sur chacune des faces duquel sont fixées des garnitures de frottement destinées à être serrées entre les plateaux de pression et de réaction de l'embrayage.

En variante, l'élément d'entrée peut consister en un disque fixé directement sur le volant moteur du véhicule ; ce peut être également l'une des rondelles de guidage qui est prolongée radialement et fixée directement sur le volant moteur.

L'élément d'entrée, lorsqu'il s'agit d'un disque support de garnitures de frottement, est accolé à l'une des rondelles de guidage de l'amortisseur principal en étant fixé à celle-ci par les entretoises ou, en variante, par des rivets spécifiques.

Les entretoises traversent des échancrures ménagées à la périphérie externe du voile ; dans ce cas, la limitation du débattement angulaire entre le voile et les rondelles de guidage est réalisée par coopération des entretoises avec le bord des échancrures.

En variante, cette limitation est réalisée par venue à spires jointives de ressorts hélicoïdaux constituant des organes élastiques à action circonférentielle, ici de forte raideur, accouplant élastiquement les rondelles de guidage et le voile.

Les rondelles de guidage entourent l'élément de sortie du dispositif amortisseur constitué en général d'un moyeu cannelé intérieurement; il en est de même du voile de l'amortisseur principal, qui lui engrène avec jeu avec le moyeu. L'amortisseur principal est donc attaqué cinématiquement directement par l'élément d'entrée.

Le préamortisseur est implanté entre le voile et l'une des rondelles de guidage de l'amortisseur principal, et ce radialement en dessous des ressorts de l'amortisseur principal.

Le préamortisseur est placé cinématiquement directement en amont de l'élément de sortie et comporte également deux rondelles de guidage disposées de part et d'autre d'un voile calé en rotation sur le moyeu à l'aide de dents. Des organes élastiques, tels que des ressorts hélicoïdaux, accouplent élastiquement le voile du préamortisseur à ses rondelles de guidage associées. Ce voile du préamortisseur est serti sur le moyeu, dont les cannelures ont une hauteur différente pour formation d'un épaulement servant à caler axialement ledit voile.

Dans un tel dispositif à deux amortisseurs, les rondelles de guidage du préamortisseur sont liées en rotation au voile de l'amortisseur principal. Les ressorts à action circonférentielle du préamortisseur sont moins raides que les ressorts à action circonférentielle de l'amortisseur principal.

Le préamortisseur est adapté à filtrer les vibrations dans le domaine de ralenti du moteur, tandis que l'amortisseur principal est adapté à filtrer les vibrations dans le domaine de marche normale du véhicule, dit domaine de roulage, depuis le domaine de ralenti du moteur; le préamortisseur peut être également adapté à filtrer les vibrations dans le domaine de roulage à faible couple moteur.

L'efficacité d'un dispositif amortisseur de torsion à l'égard des vibrations torsionnelles de basses fréquences dans le domaine de roulage du véhicule, à partir du ralenti du moteur jusqu'à 2500 tours par minute, par exemple, nécessite un grand débattement angulaire entre l'élément menant et l'élément mené, de l'ordre par exemple de 40 degrés, ce débattement s'effectuant à l'encontre des organes élastiques à action circonférentielle accouplant élastiquement les rondelles de guidage et le voile de l'amortisseur principal.

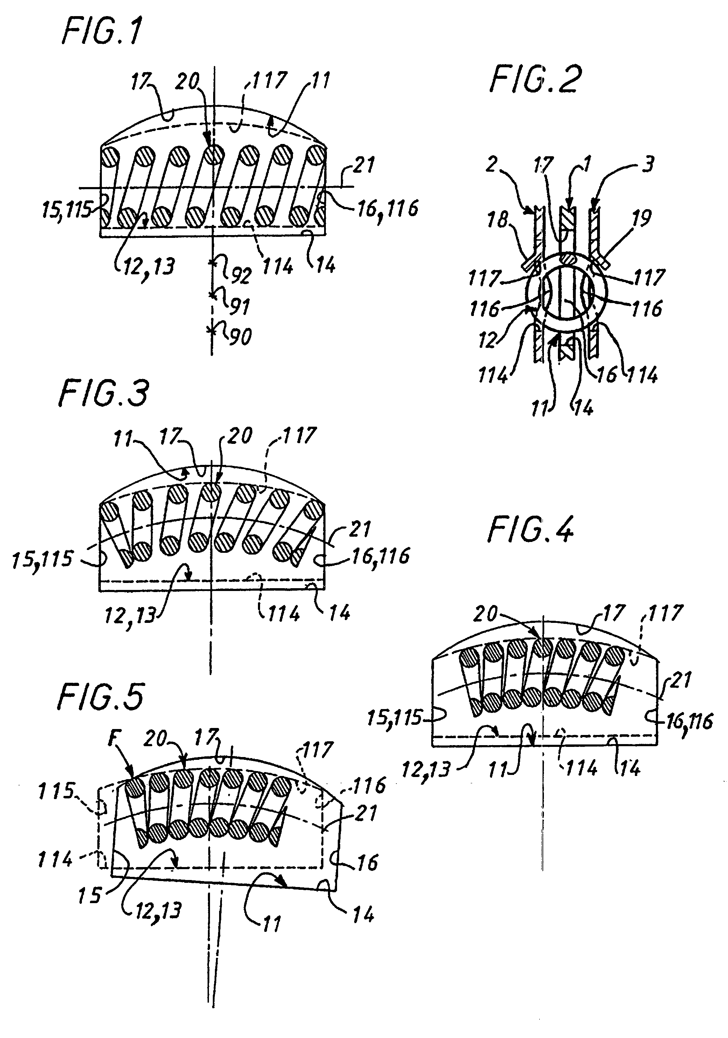

Généralement, les organes élastiques sont des ressorts hélicoïdaux disposés dans des fenêtres ménagées dans les rondelles de guidage et le voile, respectivement. Les trois fenêtres recevant un même ressort, à savoir les deux fenêtres des rondelles de guidage et la rondelle du voile sont au droit l'une de l'autre; chacune de ces fenêtres présente un bord intérieur, deux bords latéraux ou d'appui, et un bord extérieur ; comme le montrent schématiquement les figures 1 et 2, les fenêtres 11 du voile 1 et les fenêtres 12 et 13 des rondelles de guidage 2 et 3 ont respectivement un bord intérieur 14 et 114 et des bords latéraux 15, 16 et 115, 116 disposés selon les trois côtés d'un rectangle, le bord intérieur 14 ou 114 s'étendant selon la longueur dudit rectangle ; le bord extérieur 17, 117 qui fait face au bord intérieur 14, 114 est de forme curviligne à concavité dirigée vers le bord intérieur 14, 114, autrement dit vers l'axe 90 autour duquel tournent en fonctionnement le voile 1 et les rondelles de guidage 2 et 3. Sur la figure 1, les contours de ces trois fenêtres ont été superposes en plan pour la commodité du dessin ; en pratique, s'agissant notamment des fenêtres 12 et 13 des rondelles de guidage 2 et 3, les bords latéraux 115 et 116 sont décalés axialement par rapport aux bords intérieur 114 et extérieur 1 17, lequel appartient à une oeillère 18, 19, comme le montre la figure 2 ; sur la figure 1, le bord extérieur 117 et le bord intérieur 114 des fenêtres des rondelles de guidage ont été illustrés par une ligne représentant la projection selon l'axe 90, sur le plan de la figure, de la génératrice qui guide le ressort hélicoïdal 20 radialement; pour faciliter la lecture du dessin, la fenêtre du voile 11 est en traits pleins, les pointillés désignant une fenêtre ménagée dans les rondelles de guidage.

Le ressort hélicoïdal 20 est un ressort classique dont l'axe 21 est rectiligne; lorsque le ressort 20 est placé dans les fenêtres 11, 12 et 13, son axe 21 est parallèle au bord intérieur 14, 114 desdites fenêtres et ses spires d'extrémité sont en appui sur les bords latéraux 15, 115 et 16, 116 desdites fenêtres. L'assise desdites spires d'extrémités est parfaite et lors du débattement angulaire relatif de l'élément d'entrée et de l'élément de sortie, c'est-à-dire du voile 1 et des rondelles de guidage 2 et 3, ces spires d'extrémité restent au contact desdits bords latéraux, sans déplacement relatif desdites spires par rapport auxdits bords latéraux ; il n'y a donc pas de frottements parasites, au niveau des bords latéraux 15, 115 et 16, 116 qui risqueraient de venir perturber les frottements internes calculés de l'amortisseur principal pour le réglage de son hystérésis. Malheureusement, la disposition ci-dessus présente l'inconvénient qu'en fonctionnement, alors que le couple transmis par les ressorts 20 est encore faible ou nul, le ressort 20 soumis à l'action de la force centrifuge a tendance à être progressivement, avec la vitesse, plaqué contre le bord extérieur des fenêtres des rondelles de guidage et/ou du voile tandis que parallèlement il se déforme en sorte que son axe 21, initialement rectiligne, prend une forme courbe dont la concavité est tournée vers l'intérieur.

Ceci a pour conséquences que, d'une part, des frottements parasites sont introduits dans le dispositif amortisseur et, d'autre part, les spires d'extrémités quittent les bords d'appui des fenêtres. Plus précisément, les figures 1 et 2 montrent la réalisation la plus courante dans laquelle le rôle de guidage des ressorts 20 est confié entièrement aux rondelles de guidage 2 et 3 ; en effet, comme cela est visible sur ces figures, les spires d'extrémité des ressorts 20 en appui sur les bords latéraux 115, 116 sont centrées par les bords intérieurs 114 et extérieurs 117 à leur jonction avec les bords latéraux 115, 116 respectivement ; les oeillères 18, 19, donc le bord extérieur 117, sont semi-circulaires: le bord extérieur 1 17 est un arc de cercle centré en 91 qui est plus à l'extérieur par rapport à l'axe 90; dès lors, le bord extérieur 17 de la fenêtre 11 du voile 1 est un arc de cercle centré en 92, plus à l'extérieur par rapport au point 91; le bord extérieur 17 est dès lors un bord en dégagement par rapport au ressort 20; toutefois, les extrémités dudit bord extérieur 17 sont pratiquement tangentes à la spire d'extrémité du ressort 20 dans la zone de son raccordement aux bords latéraux 15 et 16; le bord intérieur 14 est légèrement plus à l'intérieur que ne le sont les bords intérieurs 1 14 des fenêtres 12, 13.

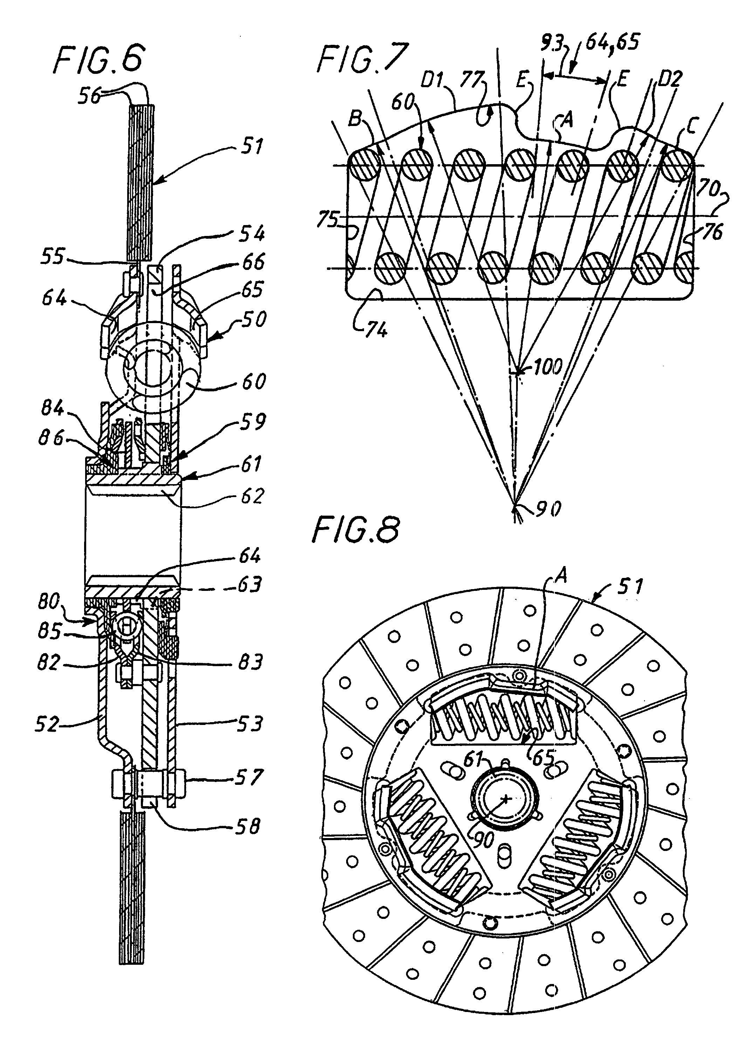

Sous l'effet de la force centrifuge, le ressort 20 prend, dans un premier temps, à couple transmis nul ou très faible, le moteur tournant à vitesse suffisamment élevée, au ralenti par exemple, une configuration telle que celle expliquée ci-dessus et illustrée par la figure 3 dans laquelle il est plaqué contre le bord extérieur 1 17 des fenêtres 12 et 13, son axe 21 devenant courbe et la partie intérieure des spires d'extrémité quittant les bords d'appui latéraux des fenêtres ; lorsque la vitesse augmente encore, le phénomène s'accentue, comme le montre la figure 4, les spires d'extrémité s'éloignant des bords latéraux ; lorsque le voile 1 est déplacé par rapport aux rondelles de guidage 2 et 3, c'est le bord extérieur 17 de ses fenêtres 11 qui entre dans un premier temps en contact avec la spire d'extrémité du ressort 20, comme illustré sur la figure 5 par la flèche F; cette spire d'extrémité se déplace, avec frottement, le long du bord extérieur du voile 1 jusqu'à trouver sa position d'appui sur le bord latéral 15 de la fenêtre 11 du voile 1 et ce n'est qu'à partir de l'instant où le ressort a retrouvé son appui sur les bords latéraux 15 et 116 que le couple est transmis normalement.

Bien entendu, un raisonnement analogue peut être fait lorsque la construction est telle que c'est le voile qui est choisi pour le guidage des ressorts au lieu des rondelles de guidage.

On comprendra que tout ce qui vient d'être dit est valable si les structures sont inversées, c'est-à-dire si l'élément d'entrée est solidaire du voile et l'élément de sortie solidaire des deux rondelles de guidage. De même, les ressorts hélicoïdaux pourraient être remplacés par des organes élastiques en matière élastomère telle que du caoutchouc, ou composite, par exemple adhérisée à deux coupelles d'extrémité.

On comprendra que les inconvénients décrits ci-dessus sont d'autant plus importants que les ressorts 20 sont de grande longueur. Bien entendu, pour éviter cet inconvénient, il est possible d'utiliser des ressorts de faible longueur, mais ceci nécessite, pour obtenir un grand débattement, un grand nombre de ressorts disposés en série, ce qui conduit à une construction complexe eu égard notamment au nombre important de pièces, à laquelle s'ajoute la difficulté de maîtriser les frottements parasites.

On a déjà proposé, notamment dans le document FR-A-2 714 436, un amortisseur de torsion disposé entre deux éléments tournants, un élément d'entrée et un élément de sortie, et comportant des organes élastiques, à action circonférentielle, deux rondelles de guidage associées à l'un des éléments et disposées axialement de part et d'autre d'un voile associé à l'autre des éléments, les organes élastiques à action circonférentielle ayant un axe et agissant entre les deux rondelles de guidage et le voile en étant placés dans des fenêtres placées en regard l'une des autres ménagées dans les rondelles de guidage et dans le voile, lesdites fenêtres ayant deux bords latéraux sur lesquels sont adaptées à être en appui les extrémités des organes élastiques, les fenêtres ayant un bord extérieur, le bord extérieur des fenêtres ménagées dans l'une des rondelles de guidage présentant une portion décalée intérieurement, c'est-à-dire radialement vers l'axe de rotation des éléments d'entrée et de sortie, dans une zone non balayée par les extrémités des organes élastiques lors du débattement relatif en rotation, dans un sens ou dans l'autre, des éléments d'entrée et de sortie; telle que prévue dans ce document, la portion décalée, vue dans un plan perpendiculaire à l'axe de l'embrayage, a une forme de V dont la pointe est dirigée vers ledit axe et définit localement une portion d'orientation axiale.

Une telle disposition donne en général satisfaction; toutefois, il peut arriver, dans certain cas, que, lorsque les organes élastiques, sous l'effet de la force centrifuge, viennent en contact avec cette portion décalée, ils sont à ce contact déportés axialement du fait que cette portion décalée n'est présente que d'un seul côté par rapport au voile: dès lors, la forme courbe prise par l'axe des moyens élastiques n'est plus plane et le fonctionnement du ressort est perturbé. Par ailleurs, la forme en T de la portion décalée peut empêcher une déformation homogène des moyens élastiques sous l'effet de la force centrifuge.

La présente invention a pour objet d'éviter ces inconvénients.

### Résumé de l'invention

Selon l'invention, un amortisseur de torsion du type ci-dessus est caractérisé par le fait que les fenêtres des deux rondelles de guidage ont un bord extérieur présentant une portion décalée intérieurement, laquelle s'étend circonférentiellement en forme d'arc de cercle dont le centre est situé vers l'extérieur par rapport à l'axe de rotation des éléments d'entrée et de sortie.

Avantageusement, ledit bord extérieur se raccorde aux bords latéraux par des portions de raccordement en forme d'arc de cercle centré sur l'axe de rotation des éléments d'entrée et de sortie ; entre la portion décalée intérieurement, d'une part, et chacune des portions de raccordement, d'autre part, le bord extérieur comporte des portions de dégagement décalées radialement vers l'extérieur.

Avantageusement, les portions de dégagement sont des arcs de cercle appartenant au même cercle de même centre que celui qui définit la portion décalée intérieurement.

De préférence, ledit bord extérieur est le bord extérieur des fenêtres ménagées dans les rondelles de guidage.

Avantageusement, les organes élastique sont des ressorts hélicoïdaux enroulés autour de leur axe.

L'amortisseur selon l'invention convient bien pour une application à un véhicule automobile : l'élément d'entrée est destiné à être solidarisé ou solidarisable au volant moteur du véhicule, l'élément de sortie étant destiné à être relié à l'entrée de la boîte de vitesses du véhicule.

L'invention a également pour objet un dispositif amortisseur comprenant, d'une part, un amortisseur principal attaqué cinématiquement directement par l'élément d'entrée et, d'autre part, un préamortisseur placé directement en amont de l'élément de sortie, dans lequel l'amortisseur principal est un amortisseur de torsion tel que ci-dessus.

### Brève description des dessins

Pour mieux faire comprendre l'objet de l'invention, on va en décrire maintenant, à titre d'exemple, purement illustratif et non limitatif, un mode de réalisation représenté sur les dessins annexés.

Sur ces dessins:
- les figures 1 à 5 sont des schémas explicatifs concernant l'art antérieur déjà commentés ci-dessus ;
- la figure 6 est une vue en coupe d'un disque de friction d'embrayage comportant un amortisseur selon l'invention ;
- la figure 7 est une vue partielle de côté du disque de la figure 6, à plus petite échelle ;
- la figure 8 est un schéma montrant une fenêtre en plan selon l'invention.

### Exemples de réalisations préférées

En se reportant aux figures 6 et 8, on voit un amortisseur principal 50 comportant un élément d'entrée 51 ici solidaire de deux rondelles de guidage 52, 53 disposées de part et d'autre d'un voile 54. Les rondelles de guidage 52, 53 sont reliées entre elles par des entretoises 57 qui les solidarisent. Des organes élastiques 60 à action circonférentielle, ici des ressorts hélicoïdaux, accouplent élastiquement le voile 54 aux rondelles de guidage 52, 53. L'élément d'entrée 51 consiste, dans ce cas d'application à une friction d'embrayage, en un disque de support 55 sur chacune des faces duquel sont fixées des garnitures de frottement 56 destinées à être serrées entre les plateaux de pression et de réaction de l'embrayage.

Le disque support 55 de garnitures de frottement est accolé à l'une des rondelles de guidage 52 de l'amortisseur principal 50 en étant fixé à celle-ci par les entretoises 57.

Les entretoises 57 traversent des échancrures 58 ménagées à la périphérie du voile 54; la limitation du débattement angulaire entre le voile 54 et les rondelles de guidage 52 et 53 est réalisée par coopération des entretoises 57 avec le bord des échancrures 58.

Les rondelles de guidage 52 et 53 entourent l'élément de sortie 61 du dispositif amortisseur constitué d'un moyeu cannelé intérieurement en 62 ; il en est de même du voile 54 de l'amortisseur principal 50, qui lui engrène avec jeu avec des cannelures extérieures 63 du moyeu 61 présentant une portion 64 de hauteur réduite à l'une de ses extrémités.

Le préamortisseur 80 est implanté entre le voile 54 et l'une des rondelles de guidage, ici la rondelle 52, de l'amortisseur principal 50, et ce radialement en dessous des ressorts 60 dudit amortisseur principal 50. Le préamortisseur 80 comporte également deux rondelles de guidage 82, 83 disposées de part et d'autre d'un voile 84 calé en rotation sur la portion 64 des cannelures 63 du moyeu 61. Des organes élastiques 85 à action circonférentielle, ici des ressorts hélicoïdaux, accouplent élastiquement les rondelles de guidage 82, 83 au voile 84. Ce voile 84 du préamortisseur 80 est serti sur le moyeu 61.

Les ressorts 85 du préamortisseur 80 sont moins raides que les ressorts 60 de l'amortisseur principal 50.

Le préamortisseur 80 est adapté à filtrer les vibrations notamment dans le domaine de ralenti du moteur, tandis que l'amortisseur principal 50 est adapté à filtrer les vibrations dans le domaine de marche normale du véhicule, dit domaine de roulage. Chacun des amortisseurs 50, 80 comporte un dispositif de frottement spécifique 59, 86 à action axiale et ce de manière connue en Soi.

Les ressorts 60 de l'amortisseur principal sont placés dans des fenêtres placées en regard l'une des autres ménagées dans les rondelles de guidage 52, 53 et dans le voile 54. Pour ne pas compliquer le dessin, et faciliter l'explication, ces fenêtres ont été superposées sur le schéma de la figure 7. Les fenêtres 64, 65 sont ménagées dans les rondelles de guidage 52, 53, et la fenêtre 66 dans le voile 54. Ces fenêtres ont des bords intérieur 74 et extérieur 77, et des bords latéraux 75 et 76 servant d'appui aux ressorts 60 ; selon l'invention, le bord extérieur 77 des fenêtres 64, 65 ménagées dans les rondelles de guidage 52, 53 présente une portion A décalée intérieurement, c'est-à-dire radialement vers l'axe 90 de rotation des éléments d'entrée 51 et de sortie 61. Ce décalage radial est tel qua la portion A est la plus proche possible du contour extérieur du ressort 60 ; comme on le comprend aisément, cette portion A permet de limiter considérablement la déformation du ressort 60 sous l'effet de la force centrifuge; cette portion A s'étend circonférentiellement dans une zone 93 qui n'est pas balayée par les spires d'extrémité du ressort 60 lors du débattement relatif des éléments d'entrée 51 et de sortie 61, ceci étant valable dans un sens ou dans l'autre, c'est-à-dire dans le sens moteur où le moteur du véhicule entraîne les roues de celui-ci et qui correspond à un déplacement des fenêtres du voile dans le sens horaire autour de l'axe 90, selon la figure 7, par rapport aux fenêtres des rondelles de guidage, ainsi que dans le sens rétro où les roues du véhicule sont menantes par rapport au moteur de celui-ci, ce qui correspond à un déplacement des fenêtres du voile dans le sens inverse par rapport au précédent ; dans les deux cas ci-dessus, les débattements angulaires ne sont pas égaux, le débattement étant supérieur dans le premier cas : dès lors, comme le montre la figure 7, la portion A est décalée circonférentiellement dans le sens qui correspond au sens de rotation du moteur du véhicule.

L'invention prévoit également de raccorder le bord extérieur 77 aux bords latéraux 75, 76 par des portions B et C en forme d'arc de cercle dont le centre est confondu avec l'axe 90 de rotation des éléments d'entrée 51 et de sortie 61: grâce à cette disposition, les spires d'extrémités resteront, malgré l'effet centrifuge, toujours maintenues dans l'angle formé par les côtés latéraux 75, 76 et les portions B et C, et, lors du débattement angulaire, l'attaque des ressorts par le voile se fera toujours par les bords latéraux des fenêtres du voile, c'est-à-dire sans frottements parasites, le bord extérieur des fenêtres du voile étant dégageant par rapport aux portions B et C.

Bien entendu, les portions A, d'une part, B et C, d'autre part, sont séparées par des portions de dégagement D, D2, c'est-à-dire décalées radialement vers l'extérieur par rapport à celles-ci.

Pour simplifier la construction, la portion décalée intérieurement A est en forme d'arc de cercle dont le centre 100 est situé vers l'extérieur par rapport à l'axe 90 ; pour la même raison, les portions de dégagement D, D2 sont également des arcs de cercle appartenant au même cercle qui définit la portion décalée intérieurement A.

Des portions de liaison E, d'orientation globalement radiale, relient la portion décalée intérieurement A à chacune des portions de dégagement D, et D2.

Bien entendu, dans tout ce qui précède, les moyens élastiques à action circonférentielle peuvent être constitués, dans chaque groupe de fenêtres, par un seul ressort hélicoïdal, ou par deux ressorts hélicoïdaux concentriques, comme montré sur la figure 6.

## Revendications

1. Amortisseur de torsion disposé entre deux éléments tournants, un élément d'entrée (51) et un élément de sortie (61), et comportant des organes élastiques (60), à action circonférentielle, deux rondelles de guidage (52, 53) associées à l'un (51) des éléments et disposées axialement de part et d'autre d'un voile (54) associé à l'autre (61) des éléments, les organes élastiques (60) à action circonférentielle ayant un axe (70) et agissant entre les deux rondelles de guidage (52, 53) et le voile (54) en étant placés dans des fenêtres (64, 65, 66) placées en regard l'une des autres ménagées dans les rondelles de guidage (52, 53) et dans le voile (54), lesdites fenêtres (64, 65, 66) ayant deux bords latéraux (75, 76) sur lesquels sont adaptées à être en appui les extrémités des organes élastiques (60), les fenêtres (64, 65, 66) ayant un bord extérieur (77), le bord extérieur (77) des fenêtres ménagées dans l'une des rondelles de guidage (52, 53) présentant une portion (A) décalée intérieurement, c'est-à-dire radialement vers l'axe (90) de rotation des éléments d'entrée (51) et de sortie (61), dans une zone (93) non balayée par les extrémités des organes élastiques (60) lors du débattement relatif en rotation, dans un sens ou dans l'autre, des éléments d'entrée (51) et de sortie (61), **caractérisé par le fait que** les fenêtres (64, 65) des deux rondelles de guidage (52, 53) ont un bord extérieur (77) qui présente une portion décalée intérieurement (A), laquelle s'étend circonférentiellement en forme d'arc de cercle dont le centre (100) est situé vers l'extérieur par rapport à l'axe (90) de rotation des éléments d'entrée (51) et de sortie (61).

2. Amortisseur selon la revendication 1, **caractérisé par le fait que** ledit bord extérieur (77) se raccorde aux bords latéraux (75, 76) par des portions (B, C) en forme d'arc de cercle centré sur l'axe (90) de rotation des éléments d'entrée (51) et de sortie (61).

3. Amortisseur selon la revendication 2, **caractérisé par le fait qu'**entre la portion décalée intérieurement (A), d'une part, et chacune des portions de raccordement (B, C), d'autre part, le bord extérieur (77) comporte des portions ce dégagement (D, D2) décalées radialement vers l'extérieur.

4. Amortisseur selon la revendication 3, **caractérisé par le fait que** les portions de dégagement (D, D2) sont des arcs de cercle appartenant au même cercle qui définit la portion décalée intérieurement (A).

5. Amortisseur selon la revendication 1, **caractérisé par le fait que** ledit bord extérieur (77) est le bord extérieur des fenêtres ménagées dans les rondelles de guidage (52, 53).

6. Amortisseur selon la revendication 1, **caractérisé par le fait que** les organes élastiques (60) sont des ressorts hélicoïdaux enroulés autour de leur axe (70).

7. Amortisseur selon la revendication 1 pour véhicule automobile, **caractérisé par le fait que** l'élément d'entrée (51) est destiné à être solidarisé ou solidarisable au volant moteur du véhicule, l'élément de sortie (61) étant destiné à être relié à l'entrée de la boite de vitesses du véhicule.

## Patentansprüche

1. Drehschwingungsdämpfer, der zwischen zwei umlaufenden Elementen, einem Eingangselement (51) und einem Ausgangselement (61), angeordnet ist, umfassend umfangsmäßig wirksame elastische Organe (60), zwei Führungsscheiben (52, 53), die mit einem (51) der Elemente verbunden und axial beiderseits einer mit dem anderen (61) der Elemente verbundenen Mitnehmerscheibe (54) angeordnet sind, wobei die umfangsmäßig wirksamen elastischen Organe (60) eine Achse (70) haben und zwischen den beiden Führungsscheiben (52, 53) und der Mitnehmerscheibe (54) wirksam und in Fenstern (64, 65, 66) angeordnet sind, die einander gegenüberliegend in den Führungsscheiben (52, 53) und in der Mitnehmerscheibe (54) ausgebildet sind, wobei die besagten Fenster (64, 65, 66) zwei Seitenkanten (75, 76) aufweisen, auf denen die Enden der elastischen Organe (60) zur Anlage kommen können, wobei die Fenster (64, 65, 66) eine Außenkante (77) haben und wobei die Außenkante (77) der in eine der Führungsscheiben (52, 53) eingearbeiteten Fenster einen nach innen, das heißt radial zur Rotationsachse (90) der Eingangs- (51) und Ausgangselemente (61) versetzten Abschnitt (A) in einem Bereich (93) aufweist, der bei der in der einen oder der anderen Richtung erfolgenden relativen Drehauslenkung der Eingangs- (51) und Ausgangselemente (61) nicht durch die Enden der elastischen Organe (60) gestreift wird , **dadurch gekennzeichnet, daß** die Fenster (64, 65) der beiden Führungsscheiben (52, 53) eine Außenkante (77) haben, die einen nach innen versetzten Abschnitt (A) aufweist, der sich umfangsmäßig in Form eines Kreisbogens erstreckt, dessen Mittelpunkt (100) im Verhältnis zur Rotationsachse (90) der Eingangs- (51) und Ausgangselemente (61) nach außen angeordnet ist.

2. Dämpfer nach Anspruch 1, **dadurch gekennzeichnet, daß** sich die besagte Außenkante (77) an die Seitenkanten (75, 76) über Abschnitte (B, C) in Form eines auf die Rotationsachse (90) der Eingangs- (51) und Ausgangselemente (61) zentrierten Kreisbogens anschließt.

3. Dämpfer nach Anspruch 2, **dadurch gekennzeichnet, daß** zwischen dem nach innen versetzten Abschnitt (A) einerseits und jedem der Anschlußabschnitte (B, C) andererseits die Außenkante (77) radial nach außen versetzte Freigabeabschnitte (D, D2) umfaßt.

4. Dämpfer nach Anspruch 3, **dadurch gekennzeichnet, daß** die Freigabeabschnitte (D, D2) Kreisbögen sind, die zu demselben Kreis gehören, der den nach innen versetzten Abschnitt (A) definiert.

5. Dämpfer nach Anspruch 1, **dadurch gekennzeichnet, daß** die besagte Außenkant:e (77) die Außenkante der in die Führungsscheiben (52, 53) eingearbeiteten Fenster ist.

6. Dämpfer nach Anspruch 1, **dadurch gekennzeichnet, daß** die elastischen Organe (60) um ihre Achse (70) gewickelte Schraubenfedern sind.

7. Dämpfer nach Anspruch 1 für Kraftfahrzeuge , **dadurch gekennzeichnet, daß** das Eingangselement (51) für die feste oder lösbare Verbindung mit dem Schwungrad des Fahrzeugs bestimmt ist, während das Ausgangselement (61) für die Verbindung mit der Eingangswelle des Getriebes des Fahrzeugs bestimmt ist.

## Claims

1. Torsion damper disposed between two rotating elements, an input element (51) and an output element (61), and having circumferentially acting elastic members (60), two guide washers (52, 53) associated with one (51) of the elements and disposed axially on each side of a disc (54) associated with the other one (61) of the elements, the circumferentially acting elastic members (60) having an axis (70) and acting between the two guide washers (52, 53) and the disc (54) whilst being placed in windows (64, 65, 66) placed opposite each other and formed in the guide washers (52, 53) and in the disc (54), the said windows (64, 65, 66) having two lateral edges (75, 76) on which the ends of the elastic members (60) are adapted to be in abutment, the windows (64, 65, 66) having an external edge (77), the external edge (77) of the windows formed in one of the guide washers (52, 53) have a portion (A) offset internally, that is radially towards the rotation axis (90) of the input (51) and output (61) elements, in an area (93) which is not swept by the ends of the elastic members (60) during the relative rotational movement, in one direction or the other, of the input (51) and output (61) elements, **characterised by** the fact that the windows (64, 65) in the two guide washers (52, 53) have an external edge (77) which has an internally offset portion (A), which extends circumferentially in the shape of an arc of a circle whose centre (100) is situated towards the outside with respect to the rotation axis (90) of the input (51) and output (61) elements.

2. Damper according to Claim 1, **characterised by** the fact that the said external edge (77) is connected to the lateral edges (75, 76) by portions (B, C) in the shape of an arc of a circle centred on the rotation axis (90) of the input (51) and output (61) elements.

3. Damper according to Claim 2, **characterised by** the fact that, between the internally offset portion (A) on the one hand and each of the connecting portions (B, C) on the other hand, the external edge (77) has clearance portions (D, D2) offset radially towards the outside.

4. Damper according to Claim 3, **characterised by** the fact that the clearance portions (D, D2) are arcs of a circle belonging to the same circle which defines the internally offset portion (A).

5. Damper according to Claim 1, **characterised by** the fact that the said external edge (77) is the external edge of the windows formed in the guide washers (52, 53).

6. Damper according to Claim 1, **characterised by** the fact that the elastic members (60) are helical springs coiled about their axis (70).

7. Damper according to Claim 1, for a motor vehicle, **characterised by** the fact that the input element (51) is intended to be fixed or fixable to the vehicle engine flywheel, the output element (61) being intended to be connected to the input of the vehicle gearbox.
